# EUROPÄISCHE PATENTSCHRIFT

(11) **EP 4 374 477 B1**
(45) Veröffentlichungstag und Bekanntmachung des Hinweises auf die Patenterteilung: **19.08.2026**
(21) Anmeldenummer: 22735087.3
(22) Anmeldetag: 08.06.2022
(51) Int. Cl.: H02K 3/24, H02K 9/197, H02K 3/487

(54) **STATOR EINER ELEKTRISCHEN MASCHINE**
STATOR OF AN ELECTRIC MACHINE
STATOR D'UNE MACHINE ÉLECTRIQUE

(30) Priorität: 23.07.2021 DE 102021207920
(43) Veröffentlichungstag der Anmeldung: 29.05.2024
(73) Patentinhaber: Robert Bosch GmbH, 70442 Stuttgart (DE)
(72) Erfinder: HEID, Thomas, 77886 Lauf (DE); KUEHBACHER, Daniel, 70569 Stuttgart (DE)
(86) Internationale Anmeldenummer: PCT/EP2022/065456
(87) Internationale Veröffentlichungsnummer: WO 2023/001447

(56) Entgegenhaltungen:
- CN-B- 102 420 468
- DE-A1- 102019 113 785
- JP-U- S5 449 520

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der DE102019113785 A1 bekannt, mit einer Statorachse und mit einem Blechpaket, an dem Statorzähne und zwischen den Statorzähnen liegende Statornuten ausgebildet sind und das eine Vielzahl von Blechlamellen umfasst, wobei die Statorzähne über ein ringförmiges Statorjoch miteinander verbunden sind, wobei in den Statornuten jeweils ein mehrere Leiter umfassendes und durch einen Stapel von Flachdrahtleitern gebildetes Leiterbündel zur Bildung einer elektrischen Statorwicklung vorgesehen ist, wobei in den Statornuten jeweils mehrere, in axialer Richtung bezüglich der Statorachse voneinander beabstandete Stützstellen zur Einklemmung des in der jeweiligen Statornut liegenden Leiters bzw. Leiterbündels gebildet sind, wobei zwischen den Wandungen der jeweiligen Statornut und dem in der Statornut angeordneten Leiter bzw. Leiterbündel zumindest ein Nutspalt gebildet ist, der einen sich in axialer Richtung erstreckenden Nutspaltkanal bildet, der von einem Kühlmedium durchströmbar ist. Die Stützstellen der jeweiligen Statornut sind jeweils an einer als Klemmstatorblech bezeichneten Sonderlamelle des Blechpakets ausgebildet, indem jeweils eine Klemmkontur umfassend mehrere Klemmvorsprünge vorgesehen ist. Die Sonderlamellen unterscheiden sich gegenüber den übrigen Blechlamellen des Blechpakets. Die Leiterbündel müssen jeweils in axialer Richtung bezüglich der Statorachse in die Statornuten eingeschoben und dabei unter der Wirkung von Klemmkräften durch die klemmenden Klemmkonturen hindurch bewegt werden.

Der Einlass bzw. Auslass in den jeweiligen Nutspaltkanal ist zwischen den Klemmvorsprüngen der jeweiligen Klemmkontur gebildet. Der Strömungsquerschnitt des Einlasses bzw. Auslasses in den jeweiligen Nutspaltkanal wird jedoch durch die Klemmvorsprünge verengt, was einen erhöhten Strömungswiderstand bzw. erhöhten Druckverlust beim Durchströmen des Nutspaltkanals verursacht.

### Vorteile der Erfindung

Der erfindungsgemäße Stator der elektrischen Maschine mit den kennzeichnenden Merkmalen des Hauptanspruchs hat demgegenüber den Vorteil, dass der Druckverlust bzw. Strömungswiderstand im jeweiligen Nutspaltkanal verringert wird, indem die Stützeinrichtungen für zumindest eine, insbesondere alle, der Statornuten zumindest einen außerhalb der Statornut verlaufenden Fluidkanal aufweisen, der einen Einlass oder Auslass in den bzw. aus dem jeweiligen Nutspaltkanal der jeweiligen Statornut und/oder einen Bypass zur Umgehung eines der Stützstellen der jeweiligen Statornut bildet. Der nachteilige strömungshydraulische Effekt hinsichtlich Druckverlust und Strömungswiderstand an den Stützstellen 11 wird somit zumindest verringert oder ganz vermieden.

Durch die in den Unteransprüchen aufgeführten Maßnahmen sind vorteilhafte Weiterbildungen und Verbesserungen des im Hauptanspruch angegebenen Stators der elektrischen Maschine möglich.

Der jeweilige Fluidkanal der jeweiligen Statornut kann vorteilhafterweise in einem der Statorzähne oder im Statorjoch des Blechpakets ausgebildet sein.

Besonders vorteilhaft ist, wenn der jeweilige Fluidkanal der jeweiligen Statornut über mehrere Stützscheiben verläuft, die zur Bildung des Fluidkanals fluchtende oder sich überlappende Kanalausnehmungen aufweisen. Insbesondere können die mehreren Stützscheiben Stützscheiben mit unterschiedlichen Kanalausnehmungen sein. Weiterhin kann die jeweilige Kanalausnehmung der jeweiligen Stützscheibe in axialer Richtung durchgängig, also als Durchgangsöffnung, ausgeführt sein. Auf diese Weise kann der Fluidkanal hinsichtlich der Fertigung besonders einfach in den Stützscheiben ausgebildet werden, beispielsweise durch Stanzen.

Weiterhin vorteilhaft ist, wenn von dem jeweiligen Fluidkanal der jeweiligen Statornut ein durch das Blechpaket verlaufender weiterer Bypass zur teilweisen Umgehung des jeweiligen Nutspaltkanals abzweigt. Auf diese Weise können zusätzlich zu den Statornuten bzw. Leitern bzw. Leiterbündeln auch andere Bereiche des Stators gekühlt werden.

Sehr vorteilhaft ist es, wenn die jeweilige Stützscheibe der jeweiligen Stützeinrichtung aus einem anderen Material als die Blechlamellen, insbesondere einem amagnetischen oder schwach elektrisch leitfähigen Material, gebildet ist. Auf diese Weise werden die Zusatzverluste durch Wirbelströme entsprechend reduziert. Alternativ kann die jeweilige Stützscheibe 13 aus dem gleichen Material wie die Blechlamellen 6 hergestellt sein.

Auch vorteilhaft ist, wenn die jeweilige Stützscheibe der jeweiligen Stützeinrichtung eine Scheibendicke aufweist, die größer ausgebildet ist als eine Blechdicke der Blechlamellen des Blechpakets. Auf diese Weise wird das Handling der Stützscheiben erleichtert und es müssen weniger Teile gefertigt und montiert werden. Alternativ kann die jeweilige Stützscheibe 13 eine Scheibendicke aufweisen, die der Blechdicke der Blechlamellen 6 entspricht.

Darüber hinaus vorteilhaft ist, wenn die Stützstellen der jeweiligen Stützeinrichtung gebildet sind durch Verdrehen von zumindest zwei Stützscheiben der Stützeinrichtung um einen bestimmten Verdrehwinkel 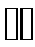 um die Statorachse. Auf diese Weise wird der Leiter bzw. das Leiterbündel der jeweiligen Statornut an der jeweiligen Stützstelle zwischen zwei Zahnflanken eingeklemmt. Alternativ können die Stützstellen durch Halteelemente der jeweiligen Stützeinrichtung gebildet sein, die beispielsweise als separate oder einstückige Elemente ausgeführt sind.

Vorteilhaft ist, wenn durch das Verdrehen der Stützscheiben zur Bildung der jeweiligen Stützstelle Stützabschnitte der Stützscheiben gebildet sind, die von gegenüberliegenden Seiten der jeweiligen Statornut in die Statornut vorstehen, um den Leiter bzw. das Leiterbündel zwischen den Stützabschnitten an Halteflächen des Leiters bzw. Leiterbündels zu halten, insbesondere einzuklemmen. Jede Stützstelle wird somit durch zumindest zwei Stützabschnitte gebildet, die von gegenüberliegenden Seiten der jeweiligen Statornut in die Statornut vorstehen und den Leiter bzw. das Leiterbündel einklemmen. Auf diese Weise gelingt es, den Leiter bzw. das Leiterbündel in Umfangsrichtung bezüglich der Statorachse mittig oder zentrisch in der jeweiligen Statornut zu lagern.

Desweiteren vorteilhaft ist, wenn zwischen dem Leiter bzw. Leiterbündel der jeweiligen Statornut und der jeweiligen Stützeinrichtung eine Schutzschicht vorgesehen ist, die insbesondere manschettenförmig, hülsenförmig, schlauchförmig, klammerförmig, U-förmig, streifenförmig oder flachbandförmig ausgebildet ist. Auf diese Weise werden die Leiter bzw. Leiterbündel vor einer mechanischen Beschädigung beispielsweise durch ein Einklemmen zwischen den vorstehenden Stützabschnitten der Stützscheiben geschützt. Beispielsweise könnten Stanzkanten oder -grate an den Stützabschnitten der Stützscheiben eine Lackisolierung der Leiter beschädigen. Insbesondere kann durch die elektrisch nichtleitende Schutzschicht eine sogenannte Nutisolation erreicht werden. Das aufwendige Einlegen einer separaten Nutisolation, beispielsweise eines Isolationspapiers, in die Statornuten kann dadurch entfallen.

Die Erfindung betrifft weiterhin eine elektrische Maschine mit einem Gehäuse, in dem ein erfindungsgemäßer Stator angeordnet ist, wobei die Statorwicklung an jeder Stirnseite des Stators einen Wickelkopf bildet, wobei innerhalb des Gehäuses an jeder Stirnseite des Stators ein den jeweiligen Wickelkopf aufnehmender Wickelkopfkühlraum zur Kühlung des jeweiligen Wickelkopfes vorgesehen ist, wobei die Statornuten ausgehend von einem der beiden Wickelkopfkühlräume bis in den anderen Wickelkopfkühlraum zumindest abschnittsweise durchströmbar sind, insbesondere über die erfindungsgemäßen Fluidkanäle der Stützeinrichtungen. Auf diese Weise kann eine besonders gute Kühlung des Stators erreicht werden.

### Zeichnung

Ein Ausführungsbeispiel der Erfindung ist in der Zeichnung vereinfacht dargestellt und in der nachfolgenden Beschreibung näher erläutert.
- Fig.1: zeigt eine Teilansicht eines erfindungsgemäßen Stators einer elektrischen Maschine,
- Fig.2: eine Ansicht des Stators nach Fig.1 entlang einer Schnittlinie II-II mit einem erfindungsgemäß in einer der Statornuten an mehreren Stützstellen gelagerten Leiter bzw. Leiterbündel und
- Fig.3: eine elektrische Maschine mit dem erfindungsgemäßen Stator nach Fig.1 und Fig.2.

### Beschreibung des Ausführungsbeispiels

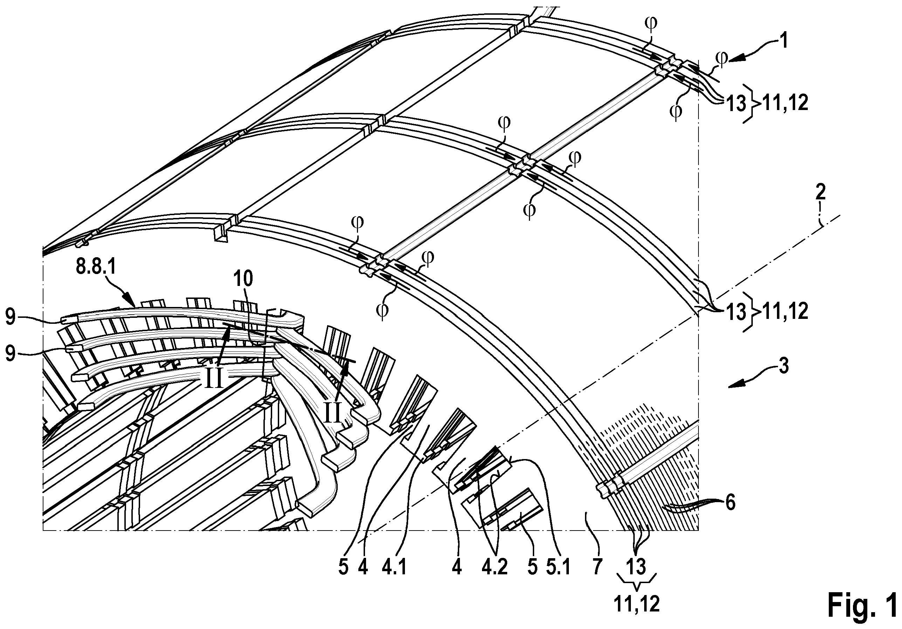

Fig.1 zeigt eine Teilansicht eines erfindungsgemäßen Stators einer elektrischen Maschine.

Der Stator 1 einer elektrischen Maschine hat eine Statorachse 2 und umfasst ein Blechpaket 3, an dem Statorzähne 4 und zwischen den Statorzähnen 4 liegende Statornuten 5 ausgebildet sind und das durch einen Stapel von Blechlamellen 6 gebildet ist.

Die Statorzähne 4 sind über ein ringförmiges Statorjoch 7 des Blechpakets 3 miteinander verbunden und können einen Zahnkopf 4.1 aufweisen. In den Statornuten 5 kann jeweils entweder ein einziger Leiter 9 oder ein mehrere Leiter 9 umfassendes Leiterbündel 10 zur Bildung einer elektrischen Statorwicklung 8 vorgesehen sein. Zur Veranschaulichung der Erfindung ist in Fig.1 nur in einer der Statornuten 5 ein Leiterbündel 10 dargestellt.

Die Leiter 9 des Stators 1 können jeweils als Flachdrahtleiter ausgeführt sein, der jeweils einen viereckigen, insbesondere rechteckförmigen Leiterquerschnitt aufweist. Weiterhin können die Leiter 9 des Stators 1 jeweils als Hairpin- oder als I-Pin-Leiterelement ausgebildet sein. Die Leiter 9 sind beispielsweise in bekannter Weise mit einem Isolierlack beschichtet.

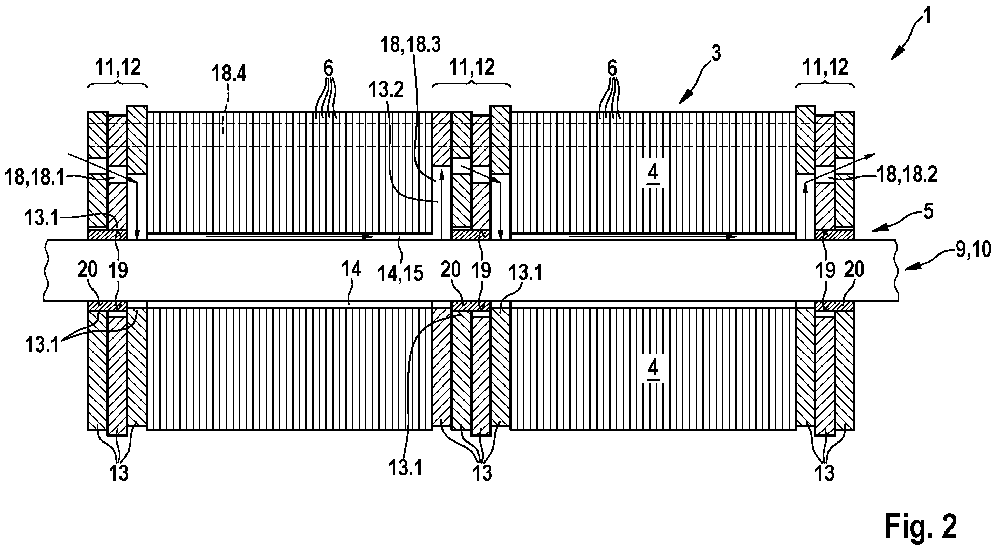

Fig.2 zeigt eine Ansicht des Stators nach Fig.1 entlang einer Schnittlinie II-II mit einem erfindungsgemäß in einer der Statornuten an mehreren Stützstellen gelagerten Leiter bzw. Leiterbündel.

In den Statornuten 5 sind jeweils zumindest zwei, beispielsweise drei, in axialer Richtung bezüglich der Statorachse 2 voneinander beabstandete Stützstellen 11 zur Halterung, Einklemmung, Einspannung oder Abstützung des in der jeweiligen Statornut 5 liegenden Leiters 9 bzw. Leiterbündels 10 gebildet. Zwischen den Stützstellen 11 ist der Leiter 9 bzw. das Leiterbündel 10 der jeweiligen Statornut 5 frei schwebend, also ohne Kontakt zum Blechpaket 3, gelagert. Der Leiter 9 bzw. das Leiterbündel 10 der jeweiligen Statornut 5 ist also nur an den Stützstellen 11 mit dem Blechpaket 6 in Kontakt.

Zwischen den Wandungen der jeweiligen Statornut 5 und dem in der Statornut 5 angeordneten Leiter bzw. Leiterbündel 9,10 ist zumindest ein Nutspalt 14 gebildet, der einen sich in axialer Richtung erstreckenden Nutspaltkanal 15 bildet, der von einem Kühlmedium, insbesondere Öl, durchströmbar ist. Die jeweilige Statornut 5 ist dadurch vom Kühlmedium in axialer Richtung durchgängig oder abschnittsweise durchgängig durchströmbar.

Beispielsweise ist der Leiter 9 bzw. das Leiterbündel 10 in der jeweiligen Statornut 5 jeweils derart zentrisch gelagert, dass in der Statornut 5 außerhalb der Stützstellen 11 drei Nutspalte 14 gebildet sind, nämlich zwei Nutspalte 14 an Zahnflanken 4.2 der jeweiligen Statornut 5 und ein Nutspalt 14 an einem Nutgrund 5.1. Dadurch ist der Querschnitt des Nutspaltkanals 15 in der jeweiligen Statornut 5 U-förmig ausgebildet.

Die Stützstellen 11 der jeweiligen Statornut 5 sind durch Stützeinrichtungen 12 gebildet, die jeweils eine oder mehrere Stützscheiben 13 umfassen. Die Stützscheiben 13 sind wie die Blechlamellen 6 Teil des Blechpakets 3 und haben Ausnehmungen zur Bildung der Statornuten 5 wie die Blechlamellen 6.

Die Stützeinrichtungen 12 sind beispielsweise an den beiden Stirnseiten des Blechpakets 3 und beispielsweise zusätzlich innerhalb des Blechpakets 3 zwischen den beiden Stirnseiten des Blechpakets 3 vorgesehen.

Die jeweilige Stützscheibe 13 der jeweiligen Stützeinrichtung 12 kann aus dem gleichen Material wie die Blechlamellen 6 oder aus einem anderen Material, beispielsweise einem amagnetischen oder schwach elektrisch leitfähigen Material, gebildet sein. Außerdem kann die jeweilige Stützscheibe 13 der jeweiligen Stützeinrichtung 12 eine Scheibendicke d2 aufweisen, die der Blechdicke d1 der Blechlamellen 6 entspricht oder die größer ausgebildet ist als die Blechdicke d1 der Blechlamellen 6 des Blechpakets 3. Die Stützscheiben 13 können also auch durch eine oder mehrere Blechlamellen 6 gebildet sein.

Die Nutspaltkanäle 15 sind an den Stützstellen 11 verengt, unterbrochen oder geschlossen, was nachteilig für die Durchströmung der Nutspaltkanäle 15 bzw. der Statornuten 5 ist.

Erfindungsgemäß ist daher vorgesehen, dass die Stützeinrichtungen 12 für zumindest eine, insbesondere alle, der Statornuten 5 zumindest einen außerhalb der Statornut 5 verlaufenden Fluidkanal 18 aufweisen, der einen Einlass 18.1 oder Auslass 18.2 in den bzw. aus dem jeweiligen Nutspaltkanal 15 der jeweiligen Statornut 5 und/oder einen Bypass 18.3 zur Umgehung eines der Stützstellen 11 der jeweiligen Statornut 5 bildet. Auf diese Weise wird der Druckverlust bzw. Strömungswiderstand im jeweiligen Nutspaltkanal 15 verringert, so dass die Nutspaltkanäle 15 mit möglichst geringem Druckverlust bzw. Strömungswiderstand vom Kühlmedium durchströmbar sind. Der nachteilige hydraulische Effekt an den Stützstellen 11 hinsichtlich Druckverlust und Strömungswiderstand wird somit zumindest verringert oder ganz vermieden.

Der jeweilige Fluidkanal 18 der jeweiligen Statornut 5 kann in einem der Statorzähne 4 oder im Statorjoch 7 des Blechpakets 3 ausgebildet sein. Der jeweilige Fluidkanal 18 der jeweiligen Statornut 5 kann beispielsweise über mehrere Stützscheiben 13 verlaufen, die zur Bildung des Fluidkanals 18 fluchtende oder sich überlappende Kanalausnehmungen 13.2 aufweisen, die beispielsweise jeweils als Durchgangsöffnung ausgeführt sind. Insbesondere können die mehreren Stützscheiben 13 Stützscheiben mit unterschiedlichen Kanalausnehmungen sein, um den Fluidkanal 18 in die Statornut 5 münden zu lassen.

Der Bypass 18.3 zur Umgehung eines der Stützstellen 11 ist beispielsweise innerhalb des Blechpakets 3 ausgebildet und dient der Verbindung zweier Abschnitte desselben Nutspaltkanals 15. Nach dem Ausführungsbeispiel in Fig.2 ist der Bypass 18.3 stromab des Einlasses 18.1 und stromauf des Auslasses 18.2 der jeweiligen Statornut 5 bzw. des jeweiligen Nutspaltkanals 15 ausgebildet.

Von dem jeweiligen Fluidkanal 18 der jeweiligen Statornut 5 kann auch ein durch das Blechpaket 3 verlaufender weiterer Bypass 18.4 zur teilweisen Umgehung des jeweiligen Nutspaltkanals 15 abzweigen, wodurch ein Teilstrom des Kühlmediums über den jeweiligen Nutspaltkanal 15 der jeweiligen Statornut 5 und ein übriger Teilstrom über den weiteren Bypass 18.4 geleitet wird.

Die Stützstellen 11 der jeweiligen Stützeinrichtung 12 sind nach dem Ausführungsbeispiel beispielsweise durch Verdrehen von zumindest zwei Stützscheiben 13 der Stützeinrichtung 12 um einen bestimmten Verdrehwinkel 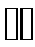 um die Statorachse 2 oder alternativ durch Halteelemente der jeweiligen Stützeinrichtung 12 gebildet.

Durch ein entgegengesetztes Verdrehen der Stützscheiben 12 zur Bildung der jeweiligen Stützstelle 11 sind Stützabschnitte 13.1 der Stützscheiben 13 gebildet, die von gegenüberliegenden Seiten der jeweiligen Statornut 5 in die Statornut 5 vorstehen, um den Leiter 9 bzw. das Leiterbündel 10 zwischen den Stützabschnitten 13.1 an Halteflächen 19 des Leiters 9 bzw. Leiterbündels 10 zu halten, insbesondere einzuklemmen. Die verdrehten Stützscheiben 12 sind im Blechpaket 3 gegen weiteres Verdrehen fixiert, beispielsweise durch stoffschlüssiges Fügen, insbesondere durch Schweißen.

Zwischen dem Leiter 9 bzw. Leiterbündel 10 der jeweiligen Statornut 5 und der jeweiligen Stützeinrichtung 12 kann eine Schutzschicht 20 vorgesehen sein, die insbesondere manschettenförmig, hülsenförmig, schlauchförmig, klammerförmig, U-förmig, streifenförmig oder flachbandförmig ausgebildet und zumindest an den Halteflächen 19 vorgesehen ist.

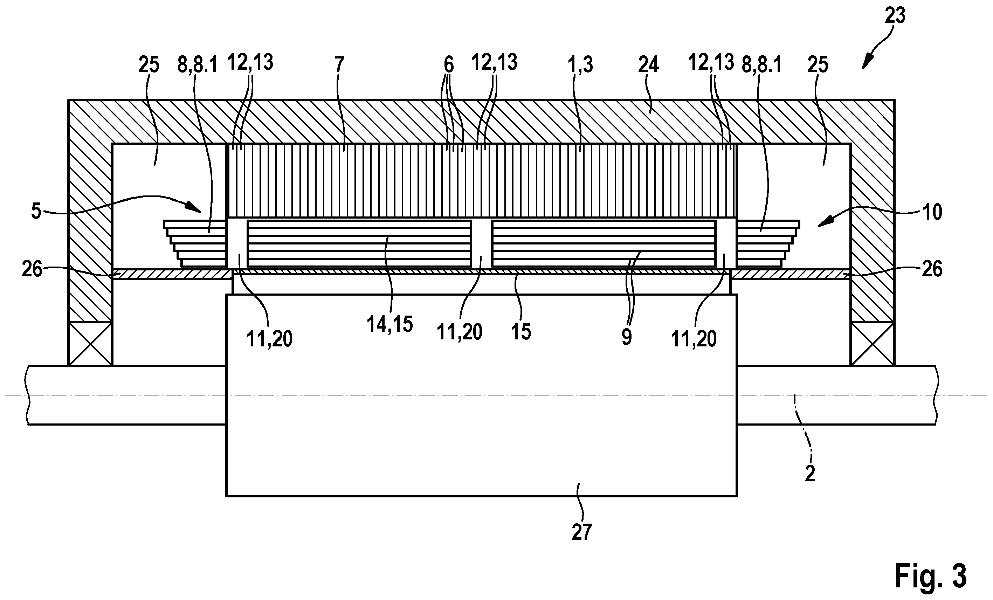

Fig.3 zeigt eine elektrische Maschine mit dem erfindungsgemäßen Stator nach Fig.1 und Fig.2.

Die elektrische Maschine 23 hat ein Gehäuse 24, in dem ein erfindungsgemäßer Stator 1 angeordnet ist. Die Statorwicklung 8 bildet an jeder Stirnseite des Stators 1 einen Wickelkopf 8.1. Innerhalb des Gehäuses 24 ist an jeder Stirnseite des Stators 1 ein den jeweiligen Wickelkopf 8.1 aufnehmender Wickelkopfkühlraum 25 zur Kühlung des jeweiligen Wickelkopfes 8.1 vorgesehen. Die Statornuten 5 des Stators 1 sind dabei ausgehend von einem der beiden Wickelkopfkühlräume 25 bis in den anderen Wickelkopfkühlraum 25 durchströmbar, beispielsweise parallel, in Reihe oder mit einer Kombination von parallel und in Reihe, insbesondere über die Fluidkanäle 18 der jeweiligen Stützeinrichtungen 12.

Der jeweilige Wickelkopfkühlraum 25 ist nach radial innen bezüglich der Statorachse 2 von einer Ringwandung 26, beispielsweise einer Dichthülse, begrenzt. Die Dichthülse 26 kann beispielsweise zur Bildung eines sogenannten Spaltrohres in einen zwischen dem Stator 1 und einem Rotor 27 der elektrischen Maschine 23 gebildeten Luftspalt reichen und diesen in axialer Richtung bezüglich der Statorachse 2 durchragen.

## Patentansprüche

1. Stator (1) einer elektrischen Maschine (23) mit einer Statorachse (2) und mit einem Blechpaket (3), an dem Statorzähne (4) und zwischen den Statorzähnen (4) liegende Statornuten (5) ausgebildet sind und das eine Vielzahl von Blechlamellen (6) umfasst, wobei die Statorzähne (4) über ein ringförmiges Statorjoch (7) miteinander verbunden sind, wobei in den Statornuten (5) jeweils ein einziger Leiter (9) oder ein mehrere Leiter (9) umfassendes Leiterbündel (10), insbesondere ein Stapel von Flachdrahtleitern, zur Bildung einer elektrischen Statorwicklung (8) vorgesehen ist, wobei in den Statornuten (5) jeweils mehrere, in axialer Richtung bezüglich der Statorachse (2) voneinander beabstandete Stützstellen (11) zur Halterung des in der jeweiligen Statornut (5) liegenden Leiters (9) bzw. Leiterbündels (10) gebildet sind, wobei zwischen den Wandungen (4.2,5.1) der jeweiligen Statornut (5) und dem in der Statornut (5) angeordneten Leiter bzw. Leiterbündel (9,10) zumindest ein Nutspalt (14) gebildet ist, der einen sich in axialer Richtung erstreckenden Nutspaltkanal (15) bildet, der von einem Kühlmedium, insbesondere Öl, durchströmbar ist, wobei die Stützstellen (11) durch Stützeinrichtungen (12) gebildet sind, die jeweils eine oder mehrere Stützscheiben (13) des Blechpakets (3) umfassen,
**dadurch gekennzeichnet, dass**
die Stützeinrichtungen (12) für zumindest eine, insbesondere alle, der Statornuten (5) zumindest einen außerhalb der Statornut (5) verlaufenden Fluidkanal (18) aufweisen, der einen Einlass (18.1) oder Auslass (18.2) in den bzw. aus dem jeweiligen Nutspaltkanal (15) der jeweiligen Statornut (5) und/oder einen Bypass (18.3) zur Umgehung eines der Stützstellen (11) der jeweiligen Statornut (5) bildet.

2. Stator nach Anspruch 1, **dadurch gekennzeichnet, dass** der jeweilige Fluidkanal (18) der jeweiligen Statornut (5) in einem der Statorzähne (4) oder im Statorjoch (7) des Blechpakets (3) ausgebildet ist.

3. Stator nach einem der vorhergehenden Ansprüche, **dadurch gekennzeichnet, dass** der jeweilige Fluidkanal (18) der jeweiligen Statornut (5) über mehrere Stützscheiben (12) verläuft, die zur Bildung des Fluidkanals (18) fluchtende oder sich überlappende Kanalausnehmungen (13.2) aufweisen, die insbesondere jeweils als Durchgangsöffnung ausgebildet sind.

4. Stator nach einem der vorhergehenden Ansprüche, **dadurch gekennzeichnet, dass** von dem jeweiligen Fluidkanal (18) der jeweiligen Statornut (5) ein durch das Blechpaket (3) verlaufender weiterer Bypass (18.4) zur teilweisen Umgehung des jeweiligen Nutspaltkanals (15) abzweigt.

5. Stator nach einem der vorhergehenden Ansprüche, **dadurch gekennzeichnet, dass** die jeweilige Stützscheibe (13) der jeweiligen Stützeinrichtung (12) aus einem anderen Material als die Blechlamellen (6), insbesondere einem amagnetischen oder schwach elektrisch leitfähigen Material, gebildet ist.

6. Stator nach einem der vorhergehenden Ansprüche, **dadurch gekennzeichnet, dass** die jeweilige Stützscheibe (13) der jeweiligen Stützeinrichtung (12) eine Scheibendicke (d2) aufweist, die größer ausgebildet ist als eine Blechdicke (d1) der Blechlamellen (6) des Blechpakets (3).

7. Stator nach einem der vorhergehenden Ansprüche, **dadurch gekennzeichnet, dass** die Stützstellen (11) der jeweiligen Stützeinrichtung (12) gebildet sind durch Verdrehen von zumindest zwei Stützscheiben (13) der Stützeinrichtung (12) um einen bestimmten Verdrehwinkel ( 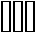 um die Statorachse (2) oder durch Halteelemente der jeweiligen Stützeinrichtung (12).

8. Stator nach Anspruch 7, **dadurch gekennzeichnet, dass** durch das Verdrehen der Stützscheiben (13) zur Bildung der jeweiligen Stützstelle (11) Stützabschnitte (13.1) der Stützscheiben (13) gebildet sind, die von gegenüberliegenden Seiten der jeweiligen Statornut (5) in die Statornut (5) vorstehen, um den Leiter (9) bzw. das Leiterbündel (10) zwischen den Stützabschnitten (13.1) an Halteflächen (19) des Leiters (9) bzw. Leiterbündels (10) zu halten, insbesondere einzuklemmen.

9. Stator nach einem der vorhergehenden Ansprüche, **dadurch gekennzeichnet, dass** zwischen dem Leiter(9) bzw. Leiterbündel (10) der jeweiligen Statornut (5) und der jeweiligen Stützeinrichtung (12) eine Schutzschicht (20) vorgesehen ist, die insbesondere manschettenförmig, hülsenförmig, schlauchförmig, klammerförmig, U-förmig, streifenförmig oder flachbandförmig ausgebildet ist.

10. Elektrische Maschine (23) mit einem Gehäuse (24), in dem ein Stator (1) nach einem der vorhergehenden Ansprüche angeordnet ist, **dadurch gekennzeichnet, dass** die Statorwicklung (8) an jeder Stirnseite des Stators (1) einen Wickelkopf (8.1) bildet, wobei innerhalb des Gehäuses (24) an jeder Stirnseite des Stators (1) ein den jeweiligen Wickelkopf (8.1) aufnehmender Wickelkopfkühlraum (25) zur Kühlung des jeweiligen Wickelkopfes (8.1) vorgesehen ist, wobei die Statornuten (5) ausgehend von einem der beiden Wickelkopfkühlräume (25) bis in den anderen Wickelkopfkühlraum (25) durchströmbar sind, insbesondere über die Fluidkanäle (18) der Stützeinrichtungen (12).

## Claims

1. Stator (1) of an electrical machine (23) having a stator axis (2) and having a laminated core (3), on which stator teeth (4) and stator grooves (5) lying between the stator teeth (4) are formed and which comprises a plurality of sheet metal laminations (6), wherein the stator teeth (4) are connected to each other via an annular stator yoke (7), wherein, in each of the stator grooves (5), a single conductor (9) or a conductor bundle (10) comprising a plurality of conductors (9), in particular a stack of flat-wire conductors, is provided for forming an electrical stator winding (8), wherein, in each of the stator grooves (5), a plurality of support points (11) spaced apart from one another in the axial direction with respect to the stator axis (2) are formed to mount the conductor (9) or conductor bundle (10) lying in the respective stator groove (5), wherein at least one groove gap (14) is formed between the walls (4.2, 5.1) of the respective stator groove (5) and the conductor or conductor bundle (9, 10) arranged in the stator groove (5), which groove gap forms a groove gap channel (15) which extends in the axial direction and can be flowed through by a cooling medium, in particular oil, wherein the support points (11) are formed by support devices (12), each comprising one or more support discs (13) of the laminated core (3),
**characterized in that**
the support devices (12) have, for at least one, in particular all, of the stator grooves (5), at least one fluid channel (18) which runs outside the stator groove (5) and forms an inlet (18.1) or outlet (18.2) into or out of the respective groove gap channel (15) of the respective stator groove (5) and/or a bypass (18.3) for bypassing one of the support points (11) of the respective stator groove (5).

2. Stator according to Claim 1, **characterized in that** the respective fluid channel (18) of the respective stator groove (5) is formed in one of the stator teeth (4) or in the stator yoke (7) of the laminated core (3).

3. Stator according to either of the preceding claims, **characterized in that** the respective fluid channel (18) of the respective stator groove (5) runs via a plurality of support discs (12), which have aligned or overlapping channel recesses (13.2) for the formation of the fluid channel (18), which, in particular, are each formed as a through opening.

4. Stator according to any one of the preceding claims, **characterized in that** a further bypass (18.4) running through the laminated core (3) branches off from the respective fluid channel (18) of the respective stator groove (5) for the partial bypass of the respective groove gap channel (15).

5. Stator according to any one of the preceding claims, **characterized in that** the respective support disc (13) of the respective support device (12) is formed from a material other than the sheet metal laminations (6), in particular an amagnetic or weakly electrically conductive material.

6. Stator according to any one of the preceding claims, **characterized in that** the respective support disc (13) of the respective support device (12) has a disc thickness (d2), which is of greater design than a sheet thickness (d1) of the sheet metal laminations (6) of the laminated core (3).

7. Stator according to any one of the preceding claims, **characterized in that** the support points (11) of the respective support device (12) are formed by rotating at least two support discs (13) of the support device (12) by a certain angle of rotation ( 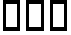 about the stator axis (2) or through holding elements of the respective support device (12).

8. Stator according to Claim 7, **characterized in that** support sections (13.1) of the support discs (13) are formed by the rotation of the support discs (13) for forming the respective support point (11), which support sections project from opposite sides of the respective stator groove (5) into the stator groove (5), in order to hold, in particular to clamp in, the conductor (9) or the conductor bundle (10) between the support sections (13.1) on holding surfaces (19) of the conductor (9) or conductor bundle (10).

9. Stator according to any one of the preceding claims, **characterized in that** a protective layer (20) is provided between the conductor (9) or conductor bundle (10) of the respective stator groove (5) and the respective support device (12), which protective layer is, in particular, of cuff-shaped, sleeve-shaped, tubular, clamp-shaped, U-shaped, strip-shaped or flat-band-shaped design.

10. Electric machine (23) having a housing (24), in which a stator (1) according to any one of the preceding claims is arranged, **characterized in that** the stator winding (8) forms a winding head (8.1) on each end face of the stator (1), wherein a winding head cooling chamber (25) receiving the respective winding head (8.1) is provided within the housing (24) on each end side of the stator (1) for cooling the respective winding head (8.1), wherein the stator grooves (5) can be flowed through, starting from one of the two winding head cooling chambers (25), as far as into the other winding head cooling chamber (25), in particular via the fluid channels (18) of the support devices (12).

## Revendications

1. Stator (1) d'une machine électrique (23) avec un axe (2) de stator et avec un empilage de tôles (3), sur lequel sont formées des dents (4) de stator et des rainures (5) de stator situées entre les dents (4) de stator et qui comprend une pluralité de lamelles de tôle (6), les dents (4) de stator étant reliées entre elles par une culasse (7) de stator annulaire, un conducteur unique (9) ou un faisceau (10) de conducteurs comprenant plusieurs conducteurs (9), en particulier une pile de fils conducteurs plats, étant prévu dans les rainures (5) de stator pour former un enroulement (8) de stator électrique, plusieurs points d'appui (11) espacés les uns des autres dans la direction axiale par rapport à l'axe (2) de stator étant respectivement formés dans les rainures (5) de stator pour maintenir le conducteur (9) ou le faisceau (10) de conducteurs situé dans la rainure (5) de stator, au moins une fente (14) de rainure étant formée entre les parois (4.2, 5.1) de la rainure (5) de stator respective et le conducteur ou le faisceau de conducteurs (9,10) disposé dans la rainure (5) de stator, laquelle forme un canal (15) de fente de rainure s'étendant dans la direction axiale, qui peut être traversé par un fluide de refroidissement, en particulier par de l'huile, les points d'appui (11) étant formés par des dispositifs d'appui (12) qui comprennent chacun un ou plusieurs disques d'appui (13) de l'empilage de tôles (3),
**caractérisé en ce que**
les dispositifs d'appui (12) pour au moins une, en particulier toutes les rainures (5) de stator comportent au moins un canal de fluide (18) s'étendant à l'extérieur de la rainure (5) de stator, lequel forme une entrée (18.1) ou une sortie (18.2) dans ou hors du canal (15) de fente de rainure respectif de la rainure (5) de stator respective et/ou une dérivation (18.3) pour contourner un des points d'appui (11) de la rainure (5) de de stator respective.

2. Stator selon la revendication 1, **caractérisé en ce que** le canal de fluide (18) respectif de la rainure (5) de stator respective est formé dans l'une des dents (4) de stator ou dans la culasse (7) de stator de l'empilage de tôles (3).

3. Stator selon l'une des revendications précédentes, **caractérisé en ce que** le canal de fluide (18) respectif de la rainure (5) de stator respective s'étend sur plusieurs disques d'appui (12), qui comportent des évidements de canal (13.2) alignés ou se chevauchent pour former le canal de fluide (18), lesquels sont formés en particulier comme une ouverture de passage.

4. Stator selon l'une des revendications précédentes, **caractérisé en ce qu'**une autre dérivation (18.4) s'étendant à travers l'empilage de tôles (3), forme un embranchement par rapport au canal de fluide (18) respectif de la rainure (5) de stator respective pour contourner en partie le canal (15) de fente de rainure respectif.

5. Stator selon l'une des revendications précédentes, **caractérisé en ce que** le disque d'appui (13) respectif du dispositif d'appui (12) respectif est formé à partir d'un matériau différent de celui des lamelles de tôle (6), en particulier d'un matériau amagnétique ou faiblement électroconducteur.

6. Stator selon l'une des revendications précédentes, **caractérisé en ce que** le disque d'appui (13) respectif du dispositif d'appui (12) respectif comporte une épaisseur de disque (d2) qui est supérieure à une épaisseur de tôle (d1) des lamelles de tôle (6) de l'empilage de tôles (3).

7. Stator selon l'une des revendications précédentes, **caractérisé en ce que** les points d'appui (11) du dispositif d'appui (12) respectif sont formés par rotation d'au moins deux disques d'appui (13) du dispositif d'appui (12) d'un angle de rotation déterminé 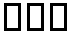 (autour de l'axe (2) de stator) ou par des éléments de maintien du dispositif d'appui (12) respectif.

8. Stator selon la revendication 7, **caractérisé en ce que** la rotation des disques d'appui (13) pour former le point d'appui (11) respectif permet de former des sections d'appui (13.1) des disques d'appui (13), qui font saillie dans la rainure (5) de stator depuis des côtés opposés de la rainure (5) de stator respective pour maintenir, en particulier coincer, le conducteur (9) ou le faisceau (10) de conducteurs entre les sections d'appui (13.1) sur des surfaces de maintien (19) du conducteur (9) ou du faisceau (10) de conducteurs.

9. Stator selon l'une des revendications précédentes, **caractérisé en ce qu'**est prévue, entre le conducteur (9) ou le faisceau (10) de conducteurs de la rainure (5) de stator respective et le dispositif d'appui (12) respectif, une couche de protection (20), qui est formée en particulier avec une forme de manchon, de douille, de tuyau, de pince, de U, de bande ou de bande plate.

10. Machine électrique (23) avec un boîtier (24), dans lequel est disposé un stator (1) selon l'une des revendications précédentes, **caractérisée en ce que** l'enroulement (8) de stator forme une tête d'enroulement (8.1) sur chaque côté frontal du stator (1), un espace de refroidissement (25) de tête d'enroulement recevant la tête d'enroulement (8.1) respective destiné à refroidir la tête d'enroulement (8.1) respective étant prévu à l'intérieur du boîtier (24) sur chaque côté frontal du stator (1), les rainures (5) de stator pouvant être traversées en partant de l'un des deux espaces de refroidissement (25) de tête d'enroulement jusque dans l'autre espace de refroidissement (25) de tête d'enroulement, en particulier par les canaux de fluide (18) des dispositifs d'appui (12).
